# EUROPEAN PATENT APPLICATION

(11) **EP 2 571 187 A1**
(43) Date of publication of application: **20.03.2013**
(21) Application number: 12180832.3
(22) Date of filing: 17.08.2012
(51) Int. Cl.: H04L 1/18

(54) **Information processing system, transmitting apparatus, receiving apparatus, and method of processing information**

(30) Priority: 15.09.2011 JP 2011201805
(71) Applicant: FUJITSU LIMITED, Kawasaki-shi, Kanagawa 211-8588 (JP)
(72) Inventor: Sano, Koji, Kanagawa, 211-8588 (JP)
(74) Representative: HOFFMANN EITLE

(57) **Abstract**

An information processing system (1) including a transmitting apparatus (10) that sends packet data through a plurality of routes (31) and a receiving apparatus (20) that receives the packet data sent through the plurality of routes (31), is disclosed. The transmitting apparatus (10) includes a common section (112) that, in response to a request to retransmit the divided piece of the data from the receiving apparatus (20), makes transmitters (121) retransmit data stored in a transmission buffer (122), together with information indicating retransmission. The receiving apparatus includes (20) a resend requester (222) that, in response to detecting an error in data received by one of the plurality of receivers (221), requests the transmitting apparatus (10) to retransmit data that have not been received successfully.

## Description

### FIELD

The present disclosure relates to an information processing system, a transmitting apparatus, a receiving apparatus, and a method of processing information.

### BACKGROUND

In recent years, as a technique for inter-apparatus data transfers, a technique has been employed, where a bundle of high-speed serial lanes with over 10 Gbps is used for data transfers. Generally, in such high-speed serial transfers, on the transmitting side, information to be transferred is divided into packets and cyclic redundancy check (CRC) bytes are appended to the ends of the respective packets , followed by transmission of the packets. On the receiving side, the CRCs are checked. The higher the transfer speed becomes, the higher the probability of errors in transmission packets becomes.

If an error is detected in data in a packet during such an inter-apparatus data transfer, that data packet is retransmitted.

For example, techniques are known, where if an error occurs in a packet, the entire erroneous packet is retransmitted.

However, a significant time is required for retransmitting the erroneous packet as a whole.

Such a delay associated with retransmission of data packets particularly becomes significant when writing data to a high-speed solid state drive.

### SUMMARY

In one aspect, the present embodiment is directed to reducing the time required for retransmitting a data packet.

Note that it is another object of the present embodiment to provide advantages and effects that can be obtained by the best modes to implement the embodiment described below but cannot be obtained with conventional techniques.

Accordingly, An information processing system including: a transmitting apparatus that sends packet data through a plurality of routes; and a receiving apparatus that receives the packet data sent through the plurality of routes, wherein the transmitting apparatus includes: a divider that divides the packet data into divided pieces of data; a plurality of transmitters, each including a transmission buffer that stores one of the divided pieces of data, and sends the one divided piece of data stored in the transmission buffer through a corresponding route of the plurality of routes; and a common section that, in response to a request to retransmit the divided piece of the data from the receiving apparatus, makes each of the plurality of transmitters retransmit the one divided piece of data stored in the transmission buffer, together with information indicating retransmission, and the receiving apparatus includes: a plurality of receivers, each instructing, in response to detecting an error in the divided piece of data received from a corresponding route of the plurality of routes, any other receivers to stop receiving any subsequent divided pieces of data; and a resend requester that, in response to the detecting an error in a divided piece of data received by one of the plurality of receivers, requests the transmitting apparatus to retransmit divided pieces of data that have not been received successfully, in response to the divided pieces of data being sent from the transmitting apparatus including the information indicating retransmission after the resend requester requesting to retransmit the divided piece of data, each of the receivers resumes reception processing. is disclosed.

Additionally, a transmitting apparatus that sends packet data through a plurality of routes to a receiving apparatus, the transmitting apparatus including: a divider that divides the packet data to be sent into divided pieces of data; a plurality of transmitters, each including a transmission buffer that stores one of the divided pieces of data, and sends the one divided piece of data stored in the transmission buffer through a corresponding route of the plurality of routes; and a common section that, in response to a request to retransmit the divided piece of the data from the receiving apparatus, makes each of the plurality of transmitters retransmit the one divided piece of data stored in the transmission buffer, together with information indicating retransmission. is also disclosed

Additionally, a receiving apparatus that receives packet data sent through the plurality of routes from a transmitting apparatus, the receiving apparatus including: a plurality of receivers, each instructing, in response to detecting an error in a divided piece of data that is generated by dividing the packet data and is received from a corresponding route of the plurality of routes, any other receivers to stop receiving any subsequent divided pieces of data; and a resend requester that, in response to the detecting an error in a divided piece of data received by one of the plurality of receivers, requests the transmitting apparatus to retransmit divided pieces of data that have not been received successfully, in response to the divided pieces of data being sent from the transmitting apparatus including the information indicating retransmission after the resend requester requesting to retransmit the divided piece of data, each of the receivers resumes reception processing. is also disclosed

Additionally, a method of sending packet data through a plurality of routes, from a transmitting apparatus including a plurality of transmitters, each being connected to one of the plurality of routes and including a transmission buffer, to a receiving apparatus including a plurality of receivers, each being connected to one of the plurality of routes, the method including: dividing, by the transmitting apparatus, the packet data into divided pieces of data; storing the divided pieces of data to the transmission buffers in the plurality of transmitters; sending the divided pieces of data stored in the transmission buffers by the plurality of transmitters through the connected routes; receiving the divided pieces of data by the plurality of receivers from the connected routes; in response to detecting an error in a received divided piece of data by one of the receivers, instructing, by the one receiver, any other receivers, to stop receiving any subsequent divided pieces of data; requesting by the receiving apparatus to the transmitting apparatus, to retransmit the divided piece of data; in response to receiving the request to retransmit the divided piece of the data from the receiving apparatus, retransmitting the one divided piece of data stored in the transmission buffer, together with information indicating retransmission; and in response to the divided pieces of data being sent from the transmitting apparatus including the information indicating retransmission, resuming reception processing by each of the receivers that suspend the reception. is also disclosed

According to the present disclosure, the time required for retransmitting a data packet is reduced.

### BRIEF DESCRIPTION OF THE DRAWINGS

FIG. 1 is a diagram schematically illustrating a hardware configuration of an information processing apparatus as one example of an embodiment;
FIG. 2 is a diagram schematically illustrating configurations of ports in the information processing apparatus as one example of an embodiment;
FIG. 3 is a diagram schematically illustrating an exemplary data structure of a data packet used in the information processing system as one example of an embodiment;
FIG. 4 is a diagram schematically illustrating an exemplary data structure of a resend request command packet used in the information processing system as one example of an embodiment;
FIG. 5 is a diagram illustrating a summary of a retransmission in the information processing apparatus as one example of an embodiment;
FIG. 6 is a diagram schematically illustrating processing in the ports in the information processing apparatus as one example of an embodiment;
FIG. 7 is a flowchart illustrating processing in the information processing apparatus as one example of an embodiment;
FIG. 8 is a time chart in the information processing apparatus as one example of an embodiment; and
FIG. 9 is a time chart in the information processing apparatus as one example of an embodiment.

### DESCRIPTION OF EMBODIMENTS

### (A) System Configuration

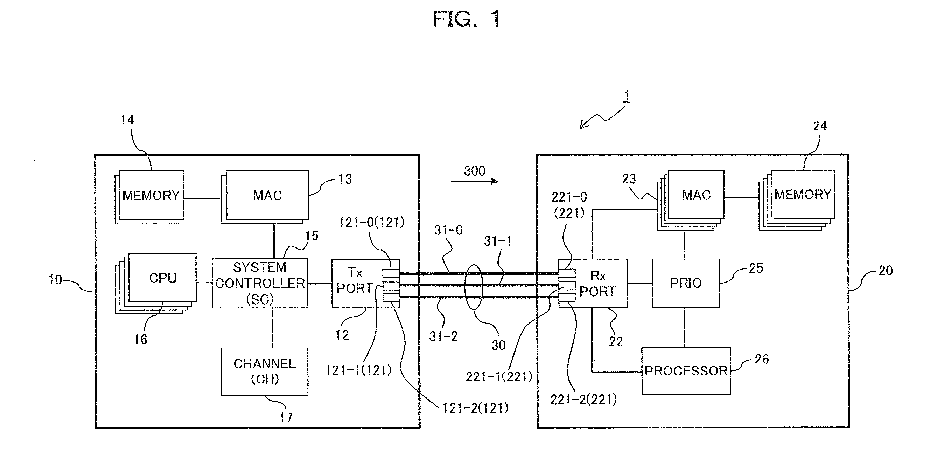

FIG. 1 is a diagram schematically illustrating a configuration of an information processing apparatus 10 as one example of an embodiment.

The information processing system 1 includes an information processing apparatus (transmitting apparatus) 10 and a system storage unit (SSU) (storage apparatus, receiving apparatus) 20, wherein the information processing apparatus 10 and the storage apparatus 20 are connected to each other through a cable 30.

The information processing apparatus 10 is a cluster system that is a single component constructing a cluster, for example. The information processing apparatus 10 includes a port 12, memory access controllers (MACs) 13, memory devices 14, a system controller (SC) 15, central processing units (CPUs) 16, and a channel controller (CH) 17.

The port 12 is an interface for high-speed serial data transfers, and includes three modules 121. The modules 121 are connected to corresponding three modules 221 in a port 22 of the storage apparatus 20 (described later) through the cable 30. The port 12 is mounted on a system chip. The MACs 13, the memory devices 14, the SC15, the CPUs 16, and the CH 17 may also be mounted in the system chip.

The MACs 13 control accesses to the memory devices 14 which will be described later. Although multiple MACs 13 are depicted in FIG. 1, a single or multiple MAC(s) 13 may be provided.

The memory devices 14 are storage apparatuses that store data, and may be dual inline memory devices (DIMMs), for example. Read and write of data to and from the memory devices 14 is controlled by the MACs 13 described above.

The system controller 15 sends or receives data and/or commands to and from the CPUs 16, the MACs 13, the port 12, and the CH 17.

The CPUs 16 are devices that execute computations. Although multiple CPUs 16 are depicted in FIG. 1, a single or multiple CPU(s) 16 may be provided.

The CH 17 is a channel controller which is connected to various devices, and controls channels for input or output from or to these devices.

The storage apparatus 20 is a high-speed storage apparatus, and may be a solid state drive, for example. For example, the storage apparatus 20 provides a storage areas to the information processing apparatus 10.

The storage apparatus 20 includes a port 22, memory access controllers (MACs) 23, memory devices 24, a prioritizer 25, and a processor 26.

The port 22 is an interface for high-speed serial data transfers, and includes three modules 221. The modules 221 are connected to corresponding three modules 121 in the port 12 of the information processing apparatus 10 through the cable 30. The port 22 is mounted on a system chip. The MACs 23, the memory devices 24, the prioritizer 25, and the processor 26 may also be mounted in the system chip.

The MACs 23 control accesses to the memory devices 24. Although multiple MACs 23 are depicted in FIG. 1, a single or multiple MAC(s) 23 may be provided.

The memory devices 24 are storage devices that store data, and may be DIMMs, for example. Read and write of data to and from the memory devices 24 is controlled by the memory access controllers 23.

The prioritizer 25 prioritizes requests sent from the information processing apparatus 10.

The processor 26 executes processing for the configuration of the storage apparatus 20.

The cable 30 is a bundle of serial lanes (routes) 31-0, 31-1, and 31-2 compliant with a high-speed serial transmission technique. The serial lanes 31-0, 31-1, and 31-2 are electric or optical cables which provide higher transfer speeds over 10 Giga bits per second (Gbps), for example.

Note that the reference symbol 31-0, 31-1, or 31-2 is used hereinafter for referring to a specific serial lane while reference symbol 31 is used when reference is made to any of the multiple serial lanes.

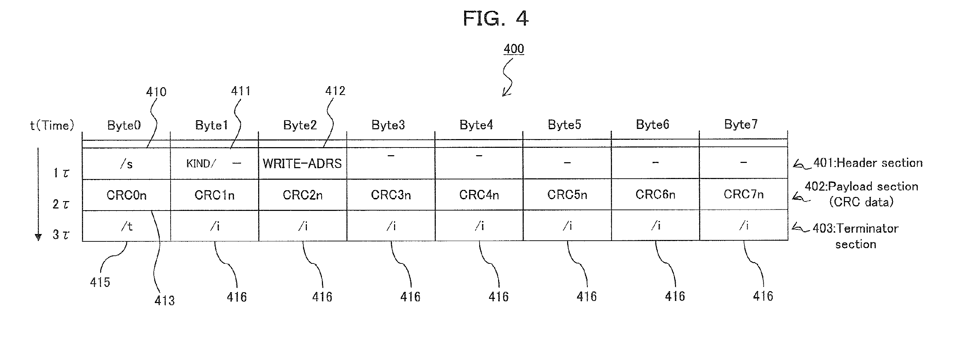

The information processing apparatus 10 and the storage apparatus 20 read and/or write from and/or to each other by sending/receiving packetized data (data packet 300) through the cable 30. When an error is detected in the data packet 300, a resend request command packet 400 (refer to FIG. 4) is sent from the storage apparatus 20 to the information processing apparatus 10, for requesting a retransmission of that data packet.

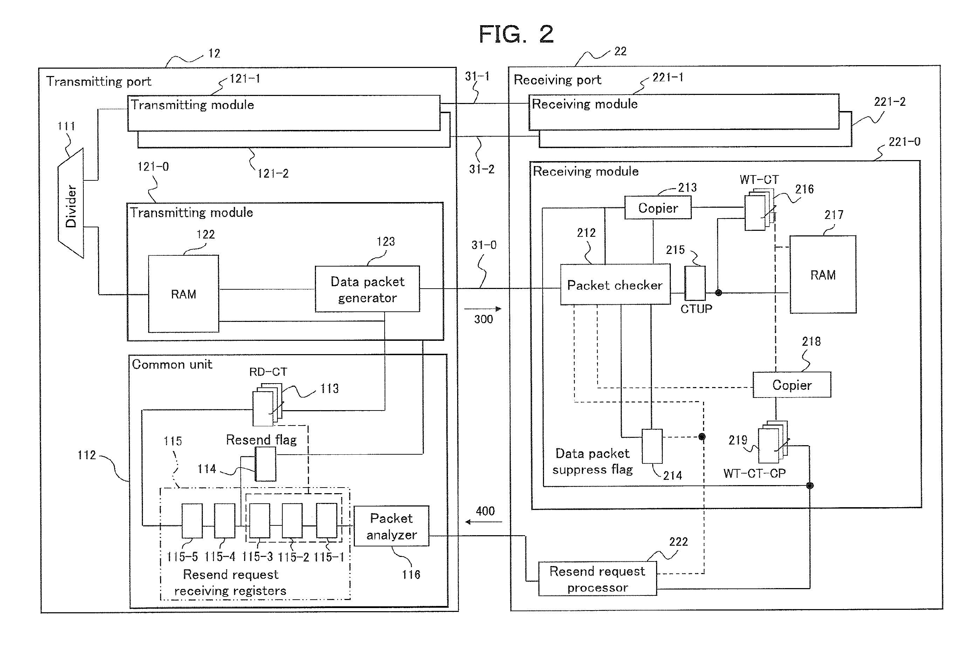

In the data packet transfer between the information processing apparatus 10 and the storage apparatus 20, data is divided into blocks, the number of the blocks corresponding to the number of the pair of modules 121 and 221, which will be described later with reference to FIG. 2, and the divided blocks are then transferred. In FIG. 1, three pairs of modules (among which one pair is a pair of redundant modules) are used for the data packet transfer.

Note that the modules 121 and 221 define circuits (functional blocks) that perform transmission and reception processing for high-speed transfers, and include a pair of redundant modules. The redundant modules enable the information processing system 1 to continue its operation in case where one of the three modules fails. In the example in FIG. 1, modules 121-2 and 221-2 are specified as redundant modules.

Next, the configurations of the ports 12 and 22 in the information processing system 1 will be described in more detail with reference to FIG. 2.

FIG. 2 is a diagram schematically illustrating the configurations of the ports 12 and 22 in the information processing apparatus 10 as one example of an embodiment.

The left side of FIG. 2 depicts the port 12 in the information processing apparatus 10, whereas the right side depicts the port 22 in the storage apparatus 20.

The port 12 in the information processing apparatus 10 includes, as depicted in the left side of FIG. 2, a divider 111, a common section (controller) 112, and transmitting modules (transmitters) 121-0, 121-1, and 121-2. Among the transmitting modules 121-0, 121-1, and 121-2, the transmitting module 121-2 is a redundant transmitting module.

Note that the reference symbols 121-0 to 121-2 are used hereinafter for referring to a specific transmitting module while reference symbol 121 is used when reference is made to any of the multiple transmitting modules.

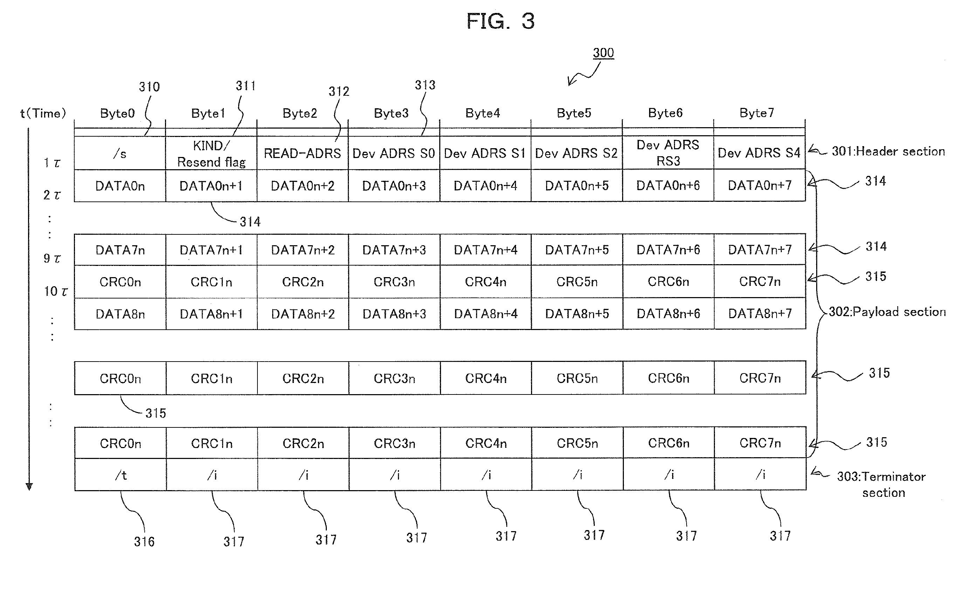

In order to enhance the efficiency of data transmissions, the divider 111 divides data to be written to the storage apparatus 20 (transmission data) into (n - m) blocks, where n represents the total count of the transmitting modules 121 and m represents the number of the redundant transmitting module(s) 121; in FIG. 2, 3 - 1 = 2 blocks, where n = 3 and m = 1. The divided data blocks are sent to the respective transmitting modules 121-0 and 121-1.

The common section 112 executes processing common to the transmitting modules 121-0 and 121-1. The common section 112 includes a read counter (RD-CT) storage 113, a resend flag storage 114, a resend request receiving register 115, and a packet analyzer 116.

The RD-CT storage 113 is an area for storing a read counter (RD-CT) value, which is the sequence number of packets which are generated by dividing data to be stored to the storage apparatus 20. This RD-CT value corresponds to the address of data to be read from an RAM 122 in the counterpart transmitting module 121 (described later). The RD-CT value stored in the RD-CT storage 113 is incremented every time data is read from the RAM 122.

The resend flag storage 114 is an area for storing a value indicating whether a data packet is to be retransmitted. For example, when a data resend request is sent from the storage apparatus 20, a value of "1" is stored to the resend flag storage 114, and the information processing apparatus 10 retransmits that data packet.

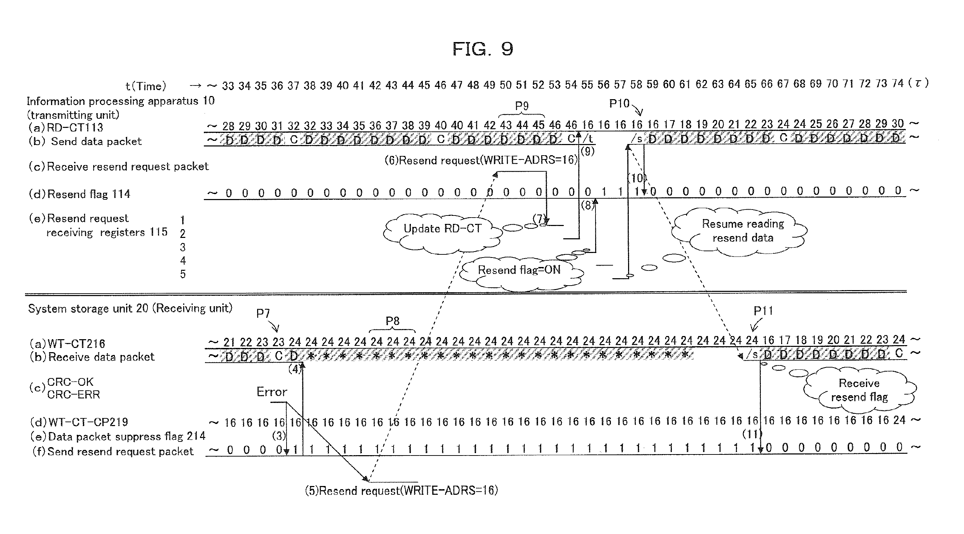

The resend request receiving register 115 is a group of registers for temporarily storing a resend request command packet received from the storage apparatus 20, and includes five registers 115-1 to 115-5. These registers are used to adjust the timing for updating the values of the RD-CT storage 113 and the resend flag storage 114 and resuming read of the retransmission data, in retransmission processing, which will be described later with reference to FIG. 9.

The packet analyzer 116 analyzes a packet received from the storage apparatus 20 to determine whether that packet is a resend request command packet 400, which will be described later with reference to FIG. 4. If a received packet is a resend request command packet 400, the packet analyzer 116, passes that packet to the resend request receiving register 115.

Each transmitting module 121 includes a random access memory (RAM, transmission buffer) 122 and a data packet generator 123.

Although only the configuration inside the transmitting module 121-0 is depicted in FIG. 2, the transmitting modules 121-0, 121-1, and 121-2 have the similar configuration. Hence, for the sake of simplicity, only the configuration of the transmitting module 121-0 is depicted in FIG. 2, and illustration of the configurations of the transmitting modules 121-1 and 121-2 is omitted and their descriptions will also be omitted.

The RAM 122 is a storage for storing transmission data sent to the transmitting module 121, after being divided by the divider 111.

The data packet generator 123 adds the RD-CT value read from the RD-CT storage 113 in the common section 112, to the transmission data sent to the transmitting module 121, after being divided by the divider 111, to generate a packet. The data packet generator 123 sends a generated packet to the counterpart receiving module 221.

The port 22 in the storage apparatus 20 includes, as depicted in the right side of FIG. 2, receiving modules (receivers) 221-0, 221-1, and 221-2, and a resend request processor 222. Among the receiving modules 221-0, 221-1, and 221-2, the receiving module 221-2 is a redundant receiving module.

Note that the reference symbols 221-0 to 221-2 are used hereinafter for referring to a specific receiving module while reference symbol 221 is used when reference is made to any of the multiple receiving modules.

The number of the receiving modules 221 corresponds to the number of the transmitting module 121 in the ports 12 in the information processing apparatus 10. Specifically, the transmitting module 121-0 and its counterpart receiving module 221-0 are connected to each other through a serial lane 31-1 depicted in FIG. 1, and the transmitting module 121-1 and its counterpart receiving module 221-1 are connected to each other through a serial lane 31-1. The transmitting module 121-2 and its counterpart receiving module 221-2 are connected to each other through a serial lane 31-2.

Each receiving module 221 includes a packet checker 212, copiers 213 and 218, a data packet suppress flag storage 214, a count-up flag storage 215, a write counter (WT-CT) storage 216, an RAM 217, and a write counter copy (WT-CT-CP) storage 219.

Although only the configuration inside the receiving module 221-0 is depicted in FIG. 2, the receiving modules 221-0, 221-1, and 221-2 have the similar configuration. Hence, for the sake of simplicity, only the configuration of the receiving module 221-0 is depicted in FIG. 2, and illustration of the configurations of the receiving modules 221-1 and 221-2 is omitted and their descriptions will also be omitted.

The packet checker 212 checks a packet received from the counterpart transmission port 12. For example, the packet checker 212 examines CRC and packet loss checks on a received packet, and determines whether an error is present therein. When no error is detected in the received packet, the packet checker 212 makes the copier 218 copy the value in the WT-CT storage 216 to a WT-CT-CP storage 219. If an error is detected in the received packet, the packet checker 212 sets a value of "1" to the data packet suppress flag storage 214 to suppress reception of any subsequent packets from the counterpart transmission port 12, and notifies a resend request processor 222 (described later) of the packet error.

The copier 213 copies a READ-ADRS 312 in a header section 301 (described later) in the received data packet, to the WT-CT storage 216.

The copier 218 copies the value in the WT-CT storage 216 into a WT-CT-CP storage 219.

The data packet suppress flag storage 214 is an area for storing a flag indicating whether reception of any subsequent packets from the counterpart transmission port 12 is suppressed. For suppressing reception of any subsequent packets, a value of "1" is set to the data packet suppress flag storage 214. Otherwise, if reception of any subsequent packets is not suppressed, a value of "1" is not set. In other words, the value remains "0".

The count-up register 215 is a register instructing a count up of data. A count up is instructed every time packet data is received, and a value of "1" is set to the count-up register 215.

The WT-CT storage 216 is an area for storing a write counter (WT-CT) value that is used when data is written to the RAM 217. This WT-CT value corresponds to the address of data to be written to a RAM 217 in the counterpart receiving module 221 (described later). The WT-CT value in the WT-CT storage 216 is incremented every time data is written to the RAM 217.

The RAM 217 is a storage area where the received data packet is written.

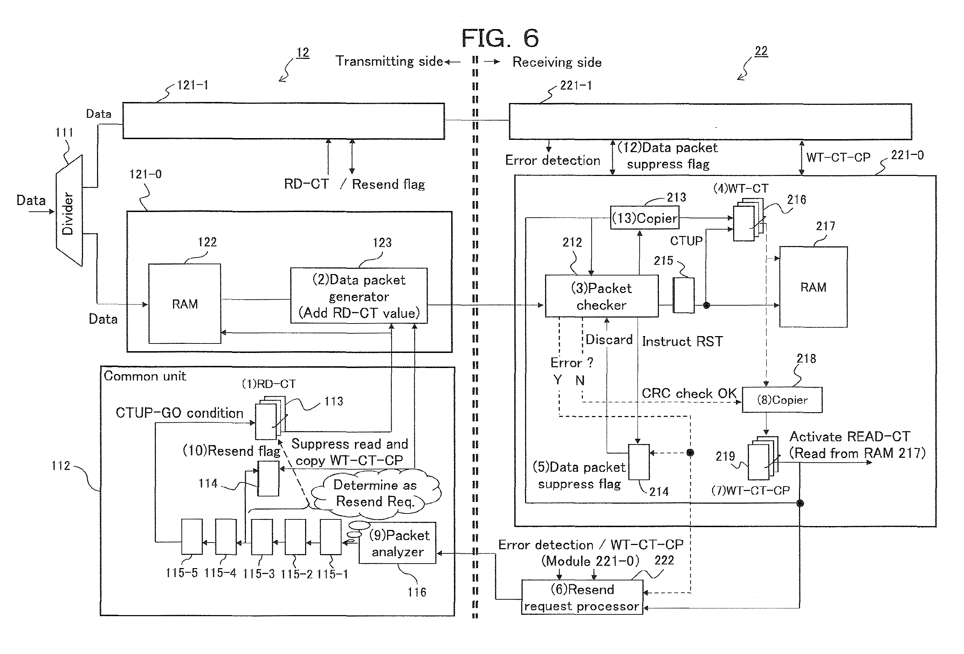

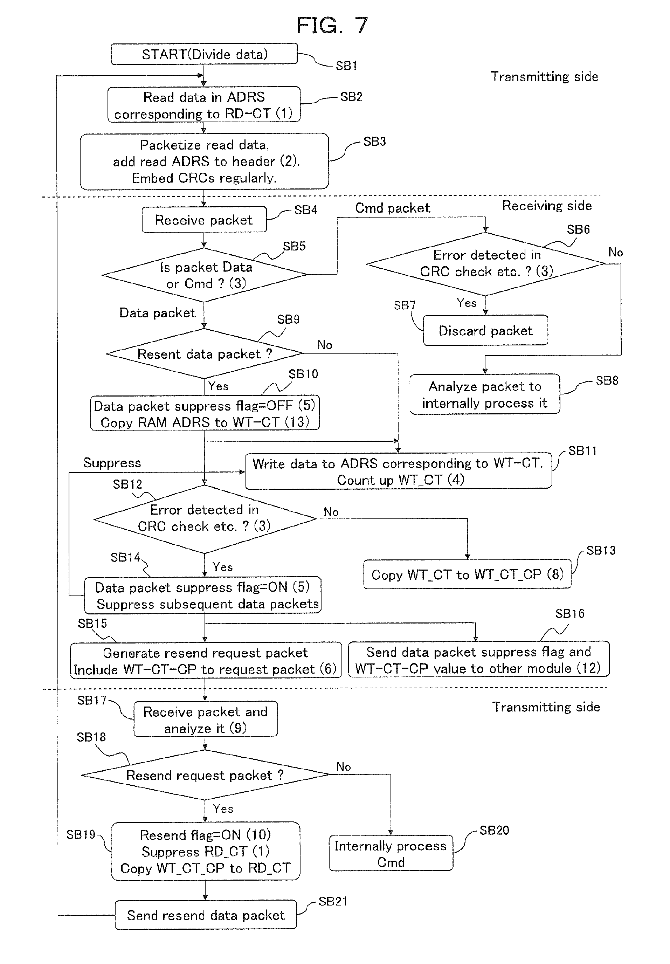

The WT-CT-CP storage 219 is an area for storing a WT-CT value, which indicates the last data block that has been received successfully from the information processing apparatus 10. A copy of the counter value in the WT-CT storage 216 indicating the last data block that has been received successfully from the information processing apparatus 10 is stored in the WT-CT-CP storage 219. The particular processing for setting a flag value to the WT-CT-CP storage 219 will be described later with reference to FIGS. 6 and 7.

The resend request processor 222 is a processor shared by the receiving modules 221-0 to 221-2. If an error is detected by the packet checker 212 in a receiving module 221 in a packet received from the counterpart transmission port 12, the resend request processor 222 requests that transmission port 12 to retransmit the data packet.

FIG. 3 depicts an exemplary data structure of a data packet 300 used in the information processing system 1 as one example of an embodiment.

The data packet 300 is generated by dividing and packetizing data to be sent from the information processing apparatus 10 to the storage apparatus 20, in the information processing system 1 as one example of an embodiment, for example.

The data packet 300 includes a header section 301, a payload section 302, and a terminator section 303, for example.

The header section 301 is the header of the packet, and includes a start byte 310, a KIND/resend flag 311, a READ-ADRS 312, and device ADRSs 313, for example.

The start byte 310 is a byte indicating a start of the packet, and is denoted by "/s" in FIG. 3. The KIND/resend flag 311 stores information indicating the type of the packet, and indicating whether the data packet is a resend packet. The READ-ADRS 312 indicates the address from which data is read from the RAM 122. The device ADRSs 313 indicate the address of the storage apparatus 20, where data is to be stored.

The payload section 302 contains data being transmitted in the packet, and includes data bytes 314 and CRCs 315, for example. The data bytes 314 contain the body of data to be transmitted from the information processing apparatus 10 to the storage apparatus 20. Each CRC 315 is a CRC for eight data bytes 314 during a duration of 8T in FIG. 3, which are vertically arranged. For example, the CRC 0n at 10T in FIG. 3 is a CRC for data bytes 314 during a duration of 8T for DATA 0n to 7n in Byte 0, and the CRC 1 n is a CRC for data bytes 314 during a duration of 8T for DATA 0n+1 to 7n+1 in Byte 1. The CRC 2n is a CRC for data bytes 314 during a duration of 8T for DATA 0n+2 to 7n+2 in Byte 2.

The terminator section 303 indicates the end of the data packet, and includes a terminator 316 and idle bytes 317, for example. In FIG. 3, the terminator 316 is denoted by "/t", and the idle bytes 317 are denoted by "/i".

FIG. 4 depicts an exemplary data structure of a resend request command packet 400 used in the information processing system 1 as one example of an embodiment.

The resend request command packet 400 a command packet used for requesting the information processing apparatus 10 to retransmit a data packet 300, when an error is detected in the data packet 300 that was sent from the information processing apparatus 10 to the storage apparatus 20.

The resend request command packet 400 includes a header section 401, a payload section 402, and a terminator section 403, for example.

The header section 401 is the header of the packet, and includes a start byte 410, a KIND flag 411, and a WRITE-ADRS 412, for example. The start byte 410 is a byte indicating a start of the packet, and is denoted by "/s" in FIG. 3. The KIND 411 stores information indicating the type of the packet. The WRITE-ADRS 412 indicates the start address from which data is to be retransmitted.

The payload section 402 includes CRCs 413 that are CRCs for the header section 401, in this retransmitted request command packet 400. For example, the CRC 0n at 2T in FIG. 4 is a CRC of the start byte 410, and the CRC 1 n is a CRC of the KIND 411.

The CRC 2n is a CRC of the WRITE-ADRS 412.

The terminator section 403 indicates the end of the data packet, and includes a terminator 415 and idle bytes 416, for example. In FIG. 3, the terminator 415 is denoted by "/t", and the idle bytes 416 are denoted by "/i".

Note that the details of bytes "/s", "/t", and "/i", and calculation of the CRCs are stipulated in a wide variety of standards for packet transmissions well known in the art, and their descriptions will be omitted.

### (B) System Operation

Next, the operation of the information processing system 1 will be described.

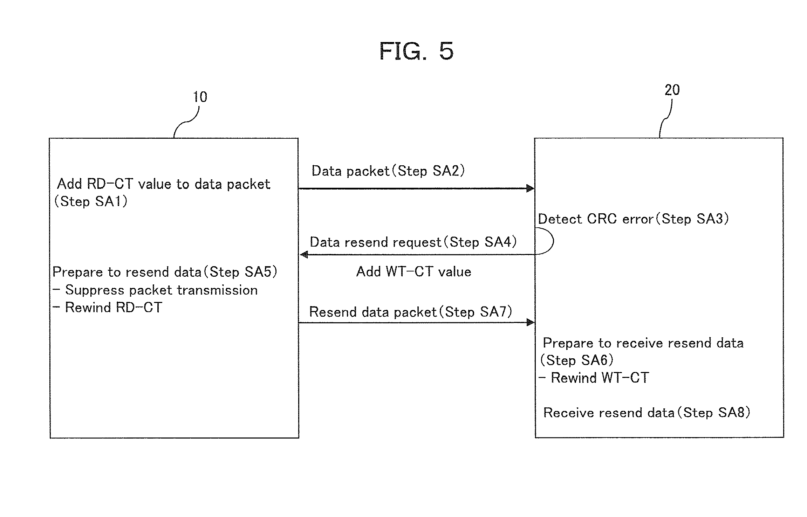

Referring to FIG. 5, retransmission processing in the information processing system 1 upon a packet error as one example of an embodiment will be summarized.

FIG. 5 depicts a schematic flow upon a packet error, when packets of data to be stored to the storage apparatus 20 are sent from the information processing apparatus 10 to the storage apparatus 20.

In Step SA1 in FIG. 5, the information processing apparatus 10 adds, to a data packet 300 to be sent, a READ-ADRS 312 corresponding to the read counter (RD-CT) value. The RD-CT value is the sequence number assigned to that packet, when data to be stored to the storage apparatus 20 is divided and packetized, for example.

In Step SA2, the information processing apparatus 10 sends the packet having the READ-ADRS 312 added thereto, to the storage apparatus 20.

In Step SA3, the storage apparatus 20 receives the data packet 300 from the information processing apparatus 10, and increments the WT-CT value in the WT-CT storage 216. The storage apparatus 20 checks CRCs, and detects an error, e.g., a CRC error, for example.

In Step SA4, the storage apparatus 20 sends a data resend request command packet 400 for the packet where the CRC error occurs, to the information processing apparatus 10. The storage apparatus 20 adds the WT-CT value of the erroneous packet, as the WRITE-ADRS 412, to the data resend request command packet 400.

In Step SA5, the information processing apparatus 10 receives the data resend request command packet 400 from the storage apparatus 20.

The information processing apparatus 10 suppresses transmission of any subsequent packets, and overwrites the value in the RD-CT storage 113 in the common section 112 with the value of the WRITE-ADRS 412 in the data resend request command packet 400 received from the storage apparatus 20 (this overwriting is referred to as "rewinding the RD-CT").

Simultaneously with Step SA5, in Step SA6, the storage apparatus 20 prepares to receive data that will be retransmitted. Specifically, the storage apparatus 20 sets the WT-CT value in the WT-CT storage 216 in the receiving module 221 to the counter value (WT-CT-CP) indicating the last data block that has been received successfully (this is referred to as "rewinding the WT-CT").

The information processing apparatus 10 sends a retransmission data packet 400 to the storage apparatus 20 (Step SA7).

Finally, the storage apparatus 20 receives the retransmission data packet 400 from the information processing apparatus 10 (Step SA8).

Next, the processing by the ports 12 and 22 in the information processing system 1 will be described in more detail with reference to FIGS. 6 and 7.

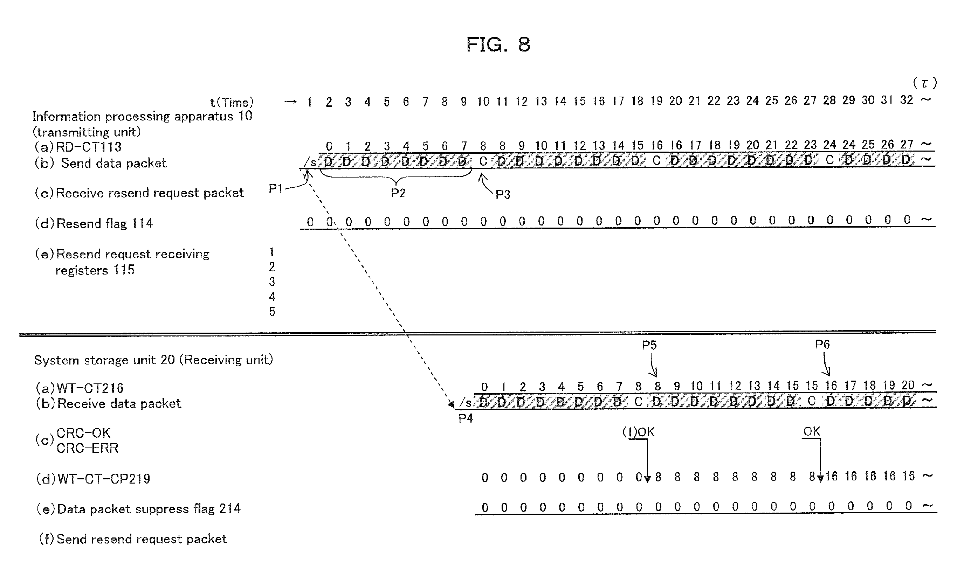

FIG. 6 is a block diagram as one example of an embodiment, and FIG. 7 is a flowchart as one example of an embodiment, where the numbers in parentheses in FIGS. 6 and 7 indicate corresponding processing. Further, the numbers in parentheses in FIGS. 8 and 9 (described later) indicate corresponding processing.

In this example, data to be stored to the storage apparatus 20 that is a solid state drive, is sent in packets from the information processing apparatus 10.

In order to enhance the efficiency of data transmissions, the divider 111 in the information processing apparatus 10 divides the data into blocks, where the number of the blocks corresponding to the number of the transmitting modules 12 (Step SB1 in FIG. 7), and sends each of the divided blocks of the transmission data to the corresponding transmitting module 121. For example, in FIG. 6, the data is divided into two blocks, each of which is transmitted to the corresponding transmitting module 121-0 or 121-1. For example, the first block may be sent to transmitting module 121-0, and the second block to transmitting module 121-1. Since the modules 121-2 and 221-2 depicted in FIG. 2 are redundant modules as described above, they are omitted from FIG. 6.

The divided data blocks are written to the respective RAMs 122 in the transmitting modules 121. After a certain size of data is written to the RAMs 122, the common section 112 in the port 12 makes the data packet generators 123 in the transmitting modules 121 read the data in the RAMs 122 simultaneously (Step SB2 in FIG. 7), based on the value in the RD-CT storage 113 (Step (1) in FIG. 6).

Specifically, each transmitting module 121 reads the counter value stored in the RD-CT storage 113, and reads data stored in the RAM 122 in the address corresponding to this counter value. As described above, the value in the RD-CT storage 113 is incremented every time data is read from the RAM 122.

The data packet generator 123 packetizes the read data into a data packet 300 (Step SB3 in FIG. 7). Specifically, the data packet generator 123 generates a header section 301 as depicted in FIG. 3, for that packet (Step (2) in FIG. 6). Specifically, the data packet generator 123 sets the value of the RD-CT storage 113 that was used when reading the data from the RAM 122, to the READ-ADRS 312 in the header section 301 in the data packet 300. Since this data packet 300 is not a retransmission data packet, a value of "0" is set to the resend flag in the header section 301 in FIG. 3.

In the payload section 302 in the data packet 300, one CRC is added for every predetermined byte(s) (for every 64 bytes (for a duration of 8T) in this embodiment), as depicted in FIG. 3.

The data packet generator 123 sends the thus generated data packet 300 to the counterpart receiving module 221.

The receiving module 221 receives that packet (Step SB4 in FIG. 7).

The packet checker 212 checks the KIND/resend flag 311 in the received packet to determine whether the received data packet is a data packet or a command packet (Step SB5 in FIG. 7).

If the received packet is a command packet (refer to the "Cmd packet" route in Step SB5 in FIG. 7), the packet checker 212 checks the received packet (e.g., executes a CRC check and/or packet loss check) (Step (3) in FIG. 6 and Step SB6 in FIG. 7).

If an error is detected in Step SB6 in FIG. 7 (refer to the "Yes" route in Step SB6 in FIG. 7), the packet checker 212 discards the packet (Step SB7 in FIG. 7).

If no error is detected in Step SB6 in FIG. 7 (refer to the "No" route in Step SB6 in FIG. 7), the packet checker 212 analyzes that packet for subsequent processing (Step SB8 in FIG. 7).

Otherwise, if the received packet is a data packet in Step SB5 in FIG. 7 (refer to the "Data packet" route in Step SB5 in FIG. 7), the packet checker 212 determines whether or not the received data packet is a retransmission data packet by checking the KIND/resend flag 311 (Step SB9 in FIG. 7).

Specifically, if the resend flag 311 in the header section 301 in the received data packet 300 is "1" and the value in the READ-ADRS 312 in the header section 301 corresponds to the value in the WT-CT-CP storage 219 in the receiving module 211 (e.g., the values in the READ-ADRS 312 and the WT-CT-CP storage 219 equal), the packet checker 212 determines that the received data packet is a retransmission data packet.

If the received data packet is not a retransmission data packet (refer to the "No" route in Step SB9 in FIG. 7), the received data is written to the RAM 217 at the address corresponding to the value in the WT-CT storage 216 in each transmitting module 211 (Step (4) in FIG. 6) (Step SB11 in FIG. 7). The WT-CT value in the WT-CT storage 216 is incremented every time data is written to the RAM 217.

Otherwise, the received data packet is a retransmission data packet (refer to the "Yes" route in Step SB9 in FIG. 7), the packet checker 212 sets a value of "0" to the data packet suppress flag 214 (Step (5) in FIG. 6). The copier 213 copies the READ-ADRS 312 in the header section 301 in the received data packet to the WT-CT storage 216 (Step (13) in FIG. 6, and Step SB10 in FIG. 7).

The packet checker 212 checks the received packet (e.g., executes a CRC check and/or packet loss check) (Step (3) in FIG. 6 and Step SB12 in FIG. 7).

If the packet checker 212 detects no error in the packet (refer to the "No" route in Step SB12 in FIG. 7), the copier 218 copies the value in the WT-CT storage 216 to the WT-CT-CP storage 219 (Step (8) in FIG. 6, and Step SB13 in FIG. 7). Since a copy of the value in the WT-CT storage 216 is made in this manner, the value stored in the WT-CT-CP storage 219 indicates the last data block that has been received successfully.

Otherwise, if the packet checker 212 detects an error in the packet (refer to the "YES" route in Step SB12 in FIG. 7), the packet checker 212 sets a value of "1" to the data packet suppress flag storage 214 (Step (5) in FIG. 6) to suppress reception of subsequent data packets (Step SB14 in FIG. 7). Once a value of "1" is set to the data packet suppress flag storage 214, any data packets received thereafter are discarded by the packet checker 212. At the same time, the packet checker 212 notifies the resend request processor 222 of the error.

In response to being notified of the error by the receiving module 221, the resend request processor 222 generates a resend request command packet 400 as indicated in FIG. 4. The resend request processor 222 sets the value the WT-CT-CP storage 219 in the receiving module 221 detecting that error, to the WRITE-ADRS 412 in the resend request command packet 400. The resend request processor 222 then sends the generated resend request command packet 400 to the transmission port 12 for requesting retransmission (Step (6) in FIG. 6, and Step SB15 in FIG. 7).

By setting the value in the WT-CT-CP storage 219 to the WRITE-ADRS 412 in the resend request command packet 400 in this manner, the reception port 22 instructs the counterpart port 12 to retransmit data block that has not been received successfully and any subsequent data.

The receiving module 221 detecting the error notifies other receiving module(s) 221 of the values in the data packet suppress flag storage 214 and the WT-CT-CP storage 219 (Step (12) in FIG. 6, and Step SB16 in FIG. 7).

In response to being notified by the receiving module 221 detecting the error, each of the other receiving module(s) 221 sets a value of "1" to its own data packet suppress flag storage 214, and writes the received value into its own the WT-CT-CP storage 219.

If multiple receiving modules 221 detect errors, the values of the WT-CT-CP storages 219 reported by those receiving modules 221 may not match, due to an inter-module skew. In such a case, the resend request processor 222 selects the smallest value among the WT-CT-CP storage 219 values reported from the receiving modules 221 to generate a resend request command packet 400 to be sent to the transmission port 12. Further, each receiving module 221 writes the smallest one of the WT-CT-CP storage 219 values to its own WT-CT-CP storage 219.

On the other hand, on the transmitting side, the transmission port 12 receives the resend request command packet 400, and the packet analyzer 116 in the common section 112 in the transmission port 12 analyzes that command packet 400 (Step (9) in FIG. 6, and Step SB17 in FIG. 7).

The packet analyzer 116 determines whether or not the received command packet is a resend request command packet 400 (Step SB18 in FIG. 7).

If the received command packet is not a resend request command packet 400 (refer to the "No" route in Step SB18 in FIG. 7), that command is handled in a suitable manner as known in the art (Step SB20 in FIG. 7).

If the received command packet is a resend request command packet 400 (refer to the "Yes" route in Step SB18 in FIG. 7), the RD-CT storage 113 is suspended, thereby temporary prohibiting the data packet generator 123 from reading data from the RAM 122. As a result, transmission of any subsequent data packets is suppressed. Additionally, the value in the WT-CT-CP storage 219 in the receiving module 221, which is set to the WRITE-ADRS 412 in the resend request command packet 400, is copied to the RD-CT storage 113 in the common section 112 (Step (7) in FIG. 6). At the same time, a value of "1" is set to the resend flag storage 114 (Step (10) in FIG. 6, and Step SB19 in FIG. 7).

After copying the WT-CT-CP value to the RD-CT storage 113, each transmitting module 122 activates their own RD-CT storage 113 for retransmitting the data requested by the reception ports 12 (Step SB21 in FIG. 7).

At this time, the data packet generator 123 sets a value of "0" to a resend flag storage 114 to the resend flag in the header section, to the second and subsequent resend packets, upon generating packets to be sent after the first packet (refer to FIG. 9 (10) described later).

Alternatively, a value of "0" may be set to the resend flag storage 114 when all data packets to be retransmitted have been sent, and a value of "0" may be set to a resend flag in the header section in a data packet 300 retransmitted by each transmitting module 121.

Note that the determination as to whether all data packets to be retransmitted have been sent, may be made by storing a backup (not illustrated) of the value when the RD-CT storage 113 is stopped in Step SB19 in FIG. 7, and comparing the backup with the current value of the RD-CT storage 113.

Thereby, irrespective of the timing when a value "0" is set to the resend flag storage 114, it is assured that retransmitted data is written to correct addresses in the RAM 217 since the value in the WT-CT storage 216 is rewind in response to a single resend packet being received by the receiving module 221.

Furthermore, in response to receiving a retransmission data packet, each receiving module 221 copies the value of the READ-ADRS 312 in the header section 301 in that packet to the WT-CT storage 216 in that receiving module 221. Each receiving module 221 also set a value of "0" to its data packet suppress flag storage 214 to resume receiving data packets. If the receiving module 221 copies the READ-ADRS 312 in the header section 301 to the WT-CT storage 216 only in response to the resend flag, a bit inversion would occur in the resend flag storage 114. If the READ-ADRS 312 is not correct, data is erroneously overwritten to an address of the RAM 217 where data has been written correctly. In order to prevent such a situation, the values of the READ-ADRS 312 and the WT-CT-CP storage 219 are related to each other (e.g., they are matched). This is because information in the header section 301 in a packet is used before a CRC check.

Next, the above-described retransmission processing will be described in more detail with reference to time charts in FIGS 8 and 9. FIGS. 8 and 9 are time charts in the information processing apparatus 1 as one example of an embodiment.

FIGS 8 and 9 are continuous in terms of time. On other words, FIG. 8 depicts the time duration 1T to 32T in the information processing apparatus 10 and the time duration 0T to 20T in the storage apparatus 20, and FIG. 9 depicts the time duration 33T to 74T in the information processing apparatus 10 and the time duration 21T to 24T in the storage apparatus 20.

As described above, the numbers in parentheses in FIGS 8 and 9 indicate corresponding processing in FIGS. 6 and 7.

In FIGS. 8 and 9, the upper half indicates processing by the information processing apparatus 10, while the lower half indicates processing by the storage apparatus 20.

In the upper half of the information processing apparatus side, (a) the value of the RD-CT storage 113 in the common section 112; (b) a transmission data packet 300; (c) reception of a resend request command packet 400; (d) the value of the resend flag storage 114 in the common section 112; and (e) values of resend request registers 115-1 to 115-5 in the common section 112, are indicated, from the top to bottom.

In the lower half of the storage apparatus 20 side, (a) the value in the WT-CT storage 216 in the receiving module 221; (b) a received data packet 300; and (c) CRC error ("CRC-OK" indicating no error, whereas "CRC-ERR" indicating occurrence of an error) are indicated. Further, (d) the value in the WT-CT-CP storage 219 in the receiving module 221; (e) the value in the data packet suppress flag storage 214; and (f) transmission of a resend request command packet 400, are also indicated.

Note that the "/s" in the data packet 300 denotes a header section 301 in the data packet 300, "D" denotes DATAn 314 in the payload section 302, "C" denotes CRCs 315 in the payload section 302, and "/t" denotes a terminator section 303.

The information processing apparatus 10 sends (i.e., not retransmission) a header section 301 of a data packet 300 at 1T (refer to the symbol P) in FIG. 8, thereby starting to send normal data packets 300. The header section 301 includes information indicated at 1T in FIG. 3. Since the data packet 300 is not a retransmission data packet, a value of "0" is set to the resend flag. If the RD-CT storage 113 in the common section 112 is "0", a value of "0" is also set to the READ-ADRS 312.

After sending data "D" for a duration of 8T (refer to the symbol P2), the information processing apparatus 10 sends a CRC denoted by "C" (refer to the symbol P3). Thereafter, the information processing apparatus 10 sends a payload section 302 including data and regularly inserted CRCs.

The storage apparatus 20 on the receiving side receives the data packet 300 (refer to the symbol P4). A CRC check is performed on the received data packet 300, and if no error is detected (Step (1)), the value "8" in the WT-CT storage 216 is copied to the WT-CT-CP storage 219 (refer to the symbol P5). This is repeated every time a CRC is received successfully (for example, the symbol P6).

In FIG. 9, when the value in the WT-CT storage 216 is "23" in the storage apparatus 20 on the receiving side, an error is detected in a received CRC (refer to the symbol P7). In response to the detection of this error, a value of "1" is set to the data packet suppress flag storage 214 (Step (3)), for suppressing reception of any subsequent data packets (Step (4)). The resend request processor 222 generates a resend request command packet 400 in the format depicted in FIG. 8, and sends it to the information processing apparatus 10 (Step (5)). The processing requires a duration of 3T, for example (refer to the symbol P8). Since the value of the WT-CT-CP storage 219 is "16", the WRITE-ADRS 412 in the resend request command packet 400 is set to "16".

The information processing apparatus 10 on the transmitting side receives the resend request command packet 400 (Step (6), the symbol P9). In response to receiving the resend request command packet 400, the RD-CT storage 113 in the common section 112 is prevented from being counted up (Step (7)). A value of "1" is set to the resend flag storage 114 (Step (8)), and the value of the WT-CT-CP storage 219 is copied to the RD-CT storage 113 (Step (9)). In this example, the RD-CT storage 113 is prevented from being counted up when it has a value of "46", and is set to the value "16" in the WT-CT-CP storage 219. Thereafter, data is read from the RAM 122 once again, and a data packet 300 is retransmitted. Since this data packet 300 is a retransmission data packet, a value of "1" is set to the resend flag in the header section 301 and "16" is set to the READ-ADRS 312.

After transmission of retransmission data packets is started (refer to the symbol P10), a value "0" is set to the resend flag storage 114 by the data packet generator 123 (Step (10)).

The storage apparatus 20 on the receiving side receives the data packet 300 having a value of "1" in the resend flag and a value of "16" in the READ-ADRS 312 (refer to the symbol P11). Since the value of the WT-CT-CP storage 219 in the storage apparatus 20 is also "16", the storage apparatus 20 determines that this data packet 300 is a retransmission data packet.

A value of "0" is set to the data packet suppress flag storage 214(Step (11)), and the value in the READ-ADRS 312 in the retransmission data packet 300 is copied to the WT-CT storage 216. Thereafter, the processing is carried out in accordance with ordinal procedures known in the art.

### (C) Advantageous Effects

In accordance with the information processing system 1 as one example of an embodiment, data is divided into multiple packets, which are sent and received simultaneously between multiple pairs of transmission and receiving modules 121 and 221. Hence, the speed of packet data transfer is increased.

Additionally, in accordance with the information processing system 1 as one example of an embodiment, the resend request processor 222 in the storage apparatus 20 on the receiving side makes a resend request by adding information indicating the last data block that has been successfully. Thereby, the information processing apparatus 10 on the transmitting side can start retransmitting data, from the exact block where an error occurs, rather than retransmitting the entire data. This can help to reduce the time required for retransmitting the data. In other words, the storage apparatus 20 on the receiving side can instruct the information processing apparatus 10 on the transmitting side not to retransmit data blocks that have been received successfully, by adding the value of the WT-CT-CP storage 219 to a resend request command packet 400.

Furthermore, the WRITE-ADRS indicating the address to be written, is added to the resend data packet. Hence, the storage apparatus 20 on the receiving side can write data, starting from the data where an error occurs, rather than discarding the packets which have been received successfully and writing the data once again from the beginning. Again, this can help to reduce the time required for retransmitting the data.

Furthermore, the time required for retransmitting the data is reduced since resend data packets are sent and received triggered by a resend request command packet sent from the storage apparatus 20 sends, omitting an exchange of a resend request and a response to the request, as commonly done in the art.

Furthermore, in the information processing system 1 as one example of an embodiment, since CRCs are embedded regularly in a single packet, the data block where a CRC error is detected in the packet, and subsequent data, can be retransmitted, without requiring retransmitting the entire data. This can help to increase the speed of the data packet retransmission processing.

Furthermore, the information processing apparatus 10 adds a resend flag to a retransmission data packet 300, and the storage apparatus 20 compares a read RAM address (READ-ADRS 312) in the received retransmission data packet 300 and the write RAM address (value in WT-CT-CP storage 219) in the storage apparatus 20. By checking whether a resend flag is present or not and comparing the addresses, if present, data in an incorrect retransmission data packet is prevented from being written to the storage apparatus 20, which can ensure the integrity of data.

### (D) Miscellaneous

Note that the present disclosure is not restricted to the embodiment described above, and various modifications may be made without departing from the spirit of an example of the embodiment.

For example, while the information processing apparatus 10 is on the receiving side and the storage apparatus 20 is on the transmitting side in the above embodiment, other combinations of apparatuses on the transmitting and receiving sides may be possible.

Additionally, while data is divided into two blocks which are sent to the corresponding transmitting modules in the above embodiment, data may be divided into more than two blocks for an increased efficiency of transfer.

For example, while three transmitting modules 121 and three receiving modules 221 are used in the above embodiment, fewer or more transmitting modules 121 and receiving modules 221 may be used.

Additionally, while a CRC is inserted for every 64 data bytes (for every 8T) in the above embodiment, the unit of data size for inserting a CRC may be modified to any suitable bites by changing settings on the transmitting and receiving sides.

Additionally, while the ports 12 and 22 are mounted on a system chip in the above embodiment, elements in the ports 12 and 22 may be embodied by software read on a computer.

Furthermore, while data packets in the format depicted in FIG. 3 and resend request commands in the format depicted in FIG. 4 are used in the above embodiment, they are merely exemplary and data packets and/or resend request command packets in any other formats may be employed.

Additionally, while packet data is divided into blocks and the divided packet data are sent and received between the multiple pairs of modules 121 and 221 for increasing the efficiency of data transfers in the above embodiment, more than one pair of modules 121 and 221 may send and receive the identical data packet. In such a case, redundancy of the packet data transfer can be ensured.

Additionally, while the RD-CT value which is a counter value is set to the READ-ADRS 312 indicating an address in the data packet 300 in the above embodiment, a conversion may be executed on the RD-CT value and the resultant value may be set to the READ-ADRS 312.

Similarly, while the WT-CT value which is a counter value is set to the address value WRITE-ADRS 412 in a resend request packet 400 in the above embodiment, a conversion may be executed on the WT-CT value and the resultant value may be set to the WRITE-ADRS 412.

## Claims

1. An information processing system (1) comprising:
a transmitting apparatus (10) that sends packet data through a plurality of routes (31); and
a receiving apparatus (20) that receives the packet data sent through the plurality of routes (31),
wherein the transmitting apparatus (10) comprises:
a divider (111) that divides the packet data into divided pieces of data;
a plurality of transmitters (121), each comprising a transmission buffer (122) that stores a divided piece of data, and sends the one divided piece of data stored in the transmission buffer (122) through a corresponding route (31) of the plurality of routes (31); and
a common section (112) that, in response to a request to retransmit the divided piece of the data from the receiving apparatus (20), makes each of the plurality of transmitters (121) retransmit the one divided piece of data stored in the transmission buffer (122), together with information indicating retransmission, and
the receiving apparatus (20) comprises:
a plurality of receivers (221), each instructing, in response to detecting an error in the divided piece of data received from a corresponding route (31) of the plurality of routes (31), any other receivers to stop receiving any subsequent divided pieces of data; and
a resend requester (222) that, in response to the detecting an error in a divided piece of data received by one of the plurality of receivers (221), requests the transmitting apparatus (10) to retransmit divided pieces of data that have not been received successfully,
in response to the divided pieces of data being sent from the transmitting apparatus (10) including the information indicating retransmission after the resend requester (222) requesting to retransmit the divided piece of data, each of the receivers (221) resumes reception processing.

2. The information processing system (1) according to claim 1, wherein
the packet data comprises an address (312) of a transmission buffer (122) to which the divided piece of data is to be stored, information (311) indicating whether or not the packet data is retransmitted, and a plurality of data blocks (302) divided by the divider (111), and
the resend requester (222), when one of the plurality of receivers (221) detects an error, requests the transmitting apparatus (10) to retransmit the divided piece of data, together with information (412) indicating divided data that is received successfully by the receiving apparatus (20), and
the common section (112), based on the information received together with the resend request indicating divided pieces of data that have been received successfully by the receiving apparatus (20), makes each transmitter (121) retransmit a data block (302) that has not been received successfully by the receiving apparatus (20) and subsequent divided pieces of data.

3. A transmitting apparatus (10) that sends packet data through a plurality of routes (31) to a receiving apparatus (20), the transmitting apparatus comprising:
a divider (111) that divides the packet data to be sent into divided pieces of data;
a plurality of transmitters (121), each comprising a transmission buffer (122) that stores a divided piece of data, and sends the one divided piece of data stored in the transmission buffer (122) through a corresponding route (31) of the plurality of routes (31); and
a common section (112) that, in response to a request to retransmit the divided piece of the data from the receiving apparatus (20), makes each of the plurality of transmitters (121) retransmit the one divided piece of data stored in the transmission buffer (122), together with information (311) indicating a resend.

4. The transmitting apparatus (10) according to claim 3, wherein
the packet data comprises an address (312) of a transmission buffer (122) to which the divided piece of data is to be stored, information (311) indicating whether or not the packet data is retransmitted, and a plurality of data blocks (302) divided by the divider (111), and
the common section (112), based on the information (412) received together with the resend request indicating divided pieces of data that have been received successfully by the receiving apparatus (20), makes each transmitter (121) retransmit a data block (302) that has not been received successfully by the receiving apparatus (20) and subsequent divided pieces of data.

5. A receiving apparatus (20) that receives packet data sent through the plurality of routes (31) from a transmitting apparatus (10), the receiving apparatus comprising:
a plurality of receivers (221), each instructing, in response to detecting an error in a divided piece of data that is generated by dividing the packet data and is received from a corresponding route (31) of the plurality of routes (31), any other receivers (221) to stop receiving any subsequent divided pieces of data; and
a resend requester (222) that, in response to the detecting an error in a divided piece of data received by one of the plurality of receivers (221), requests the transmitting apparatus (10) to retransmit divided pieces of data that have not been received successfully,
in response to the divided pieces of data being sent from the transmitting apparatus (10) including the information (311) indicating retransmission after the resend requester (222) requesting to retransmit the divided piece of data, each of the receivers (221) resumes reception processing.

6. The receiving apparatus (20) according to claim 5, wherein
the packet data comprises an address (312) of a transmission buffer (122) to which the divided piece of data is to be stored, information (311) indicating whether or not the packet data is retransmitted, and a plurality of data blocks (302) divided by the divider (111), and
the resend requester (222), when one of the plurality of receivers (221) detects an error, requests the transmitting apparatus (10) to retransmit the divided piece of data, together with information (412) indicating divided data that is received successfully by the receiving apparatus (20).

7. A method of sending packet data through a plurality of routes (31), from a transmitting apparatus (10) comprising a plurality of transmitters (121), each being connected to one of the plurality of routes (31) and comprising a transmission buffer (122), to a receiving apparatus (20) comprising a plurality of receivers (221), each being connected to one of the plurality of routes (31), the method comprising:
dividing (SB1), by the transmitting apparatus (10), the packet data into divided pieces of data;
storing the divided pieces of data to the transmission buffers (122) in the plurality of transmitters (121);
sending (SB3) the divided pieces of data stored in the transmission buffers (122) by the plurality of transmitters (121) through the connected routes (31);
receiving (SB4) the divided pieces of data by the plurality of receivers (221) from the connected routes (31);
in response to detecting an error in a received divided piece of data by one of the receivers (221), instructing (SB16), by the one receiver, any other receivers (221), to stop receiving any subsequent divided pieces of data;
requesting (SB15) by the receiving apparatus (20) to the transmitting apparatus (10), to retransmit the divided piece of data;
in response to receiving (SB17) the request to retransmit the divided piece of the data from the receiving apparatus (20), retransmitting (SB21) the one divided piece of data stored in the transmission buffer (122), together with information (311) indicating a resend; and
in response to the divided pieces of data being sent from the transmitting apparatus (10) including the information (311) indicating retransmission, resuming reception processing by each of the receivers (221) that suspend the reception.

8. The method according to claim 7, wherein
the packet data comprises an address (312) of a transmission buffer (122) to which the divided piece of data is to be stored, information (311) indicating whether or not the packet data is retransmitted, and a plurality of data blocks (302) divided by the divider (111),
the requesting the retransmission of the divided piece of data to the transmitting apparatus (10) comprises requesting the divided piece of data to the transmitting apparatus (10), together with information (412) indicating divided pieces of data that have been received successfully by the receiving apparatus (20), and
each of the transmitters (121) retransmitting, based on the information received together with the resend request indicating divided pieces of data that have been received successfully, a data block (302) that has not been received successfully by the receiving apparatus (20) and subsequent divided pieces of data.
